# EUROPEAN PATENT SPECIFICATION

(11) **EP 2 084 885 B1**
(45) Date of publication and mention of the grant of the patent: **20.03.2013**
(21) Application number: 07847132.3
(22) Date of filing: 09.11.2007
(51) Int. Cl.: H04L 29/12

(54) **ADDRESS TRANSLATION**
ADRESSENÜBERSETZUNG
TRADUCTION D'ADRESSES

(30) Priority: 13.11.2006 US 865614 P
(43) Date of publication of application: 05.08.2009
(73) Proprietor: Nokia Corporation, 02150 Espoo (FI)
(72) Inventor: RASANEN, Juha, 02660 Espoo (FI); WESTMAN, Ilkka, 00510 Helsinki (FI); TUOHINO, Markku, 02130 Espoo (FI); KOIVUSALO, Erkki, Espoo (FI)
(74) Representative: Tognetty, Virpi Maria
(86) International application number: PCT/EP2007/062124
(87) International publication number: WO 2008/058906

(56) References cited:
- EP-A- 1 898 593
- "Telecoms & Internet converged Services & Protocols for Advanced Networks (TISPAN); NAT Traversal feasibility study report; Draft ETSI TR 07 022" ETSI STANDARDS, LIS, SOPHIA ANTIPOLIS CEDEX, FRANCE, no. V0.0.3, 1 September 2006 (2006-09-01), XP014035962 ISSN: 0000-0001
- CISCO SYSTEMS: "Alternative NAT Traversal Approach", 3GPP TSG SA WG2 ARCHITECTURE, 8 May 2006 (2006-05-08), - 12 May 2006 (2006-05-12), Shanghai, China

## Description

### FIELD OF THE INVENTION

The disclosure relates to data communication sessions in a communication system and in particular, but not exclusively, to multimedia sessions in arrangements where an address translator node is located between a user device and another node.

### BACKGROUND

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

A communication system can be seen as a facility that enables communications sessions between two or more entities such as user device / equipment or other nodes associated with the communication system. The communication may comprise, for example, communication of voice, multimedia content, and other data. A session may, for example, be a telephone call type session between two users, a multi-party session, for example a conference call, or a data communication session between at least one user and a node such as an application server (AS).

A communication system typically operates in accordance with given standards and/or specifications, which set out what the various entities associated with the communication system are permitted to do and how that should be achieved. For example, a standard or specification may define if the user, or more precisely, user device or equipment is provided with a circuit switched service and/or a packet switched service. Communication protocols and/or parameters, which shall be used for the connection, may also be defined. In other words, a specific set of rules on which the communication can be based is defined to enable communication. A communication system may provide fixed or wireless access for the user equipment.

A communication system may include various entities for controlling and/or carrying communications between two or more communicating parties. Different control entities may be interconnected. One or more gateway nodes may be provided for connecting various networks, for example for connecting a public switched telephone network (PSTN), a public landline mobile network (PLMN), a local area network (LAN), a wireless LAN (WLAN) and/or other communication networks such as an IP (Internet Protocol) and/or other packet switched data networks to each other. A communications network the user is connected to can be understood as providing an access system enabling a user to access other networks, hosts, or services offered by specific service providers.

In a packet data network, a packet data carrier may be established to carry traffic flows consisting of data packets over the network. Each data packet is provided with appropriate routing information, such as destination address and port information so that the various entities in the route to the destination know where the data packet shall be forwarded.

Various types of services can be provided to the users of a communications system. A type of possible services is commonly referred to as multimedia. An example of multimedia services is where multimedia content, such as images, videos, audio files or other data, may be downloaded from an application server to a user equipment. Users may also send data to other entities via a communication system. For example, a user may create something, such as take a photo or make a video, and send his creation in a digitized form, i.e. as content data to a multimedia server. The work may then be downloaded from the server by other parties interested of the same subject. Data communications for enabling communication of multimedia may be provided by an appropriate data communications system, for example an Internet Protocol Multimedia Subsystem (IMS).

A multimedia data communication system may comprise an addresses translator node, for example a network address translator (NAT). Use of an address translator results in a situation where a pair of a private Internet Protocol (IP) address and a port that belongs to an internal node behind an address translator node translates to a different pair of a public IP address and a port.

In an IP multimedia session the IP address and port used for sending and receiving a media packet is usually different than the IP address and port used to send and receive the signaling traffic. The presence of the address translator node therefore may cause certain problems for a node that is located behind the address translator node. For example, because of the intermediate address translator node such a node may not know the translation of private and public IP address and port pairs for incoming media traffic in advance, for example before it sends a media packet through the address translator node. Further, the address translator node may not pass incoming media packets to the node behind the translator before that later node has sent some media packets through the address translator. Address translators are typically configured to create a mapping from a private IP address and port to a public IP address and port when packets are sent from the private IP address and port. Before this mapping exists the private IP address and port cannot be reached through the address translator.

Background art on NAT detection and NAT traversal is disclosed in Draft ETSI TR 07 022 WO.0.3>₃.

An element known as the media proxy may also be provided in a multimedia system. The function of a media proxy is to force the media traffic between parties, e.g. a user and an application server, to traverse through it to provide the network operator with a better control on the media traffic. The media proxy reserves a pair of public IP address and port to be used by a node for the media traffic, and maps this pair of reserved public IP address and port to the IP address and port of the node.

The presence of a media proxy may complicate the already complicated situation caused by an address translator node even further. If one of the parties is behind an address translator node, the media proxy must map the public IP address and port of the party to the reserved IP address and port. The presence of an address translator node would require the media proxy to map the translated IP address and port for media packets instead of the private IP address and port of the party to the reserved IP address and port reserved by the media proxy. However, this translated IP address and port is not available in the media proxy at the time of IP address and port reservation.

On the other hand, if no address translator node is present, the media proxy can instantly map the IP address and port of the node to the IP address and port reserved by the media proxy. In other words, the presence of an address translator node necessarily affects the behavior of a media proxy. A problem is the lack of a proper mechanism to inform and/or control the media proxy in this regard.

A method for traversing an address translator node has been standardized in the 3rd Generation Partnership Project (3GPP) from Rel-6 onwards (see 3GPP TS 23.228, Annex G, and TS 24.229). This involves an application level gateway (ALG) and network address translation gateway (NAT-GW) based method for traversal of uncontrolled network address translator nodes (NAT devices). When there is a network address translator node between a user equipment (UE) and the IMS core network, in this method a controller such as an application function/proxy call session control function (AF/P-CSCF) discovers the existence of an address translator node by comparing the IP addresses and ports in received session initiation protocol/session description protocol (SIP/SDP) messages to the source IP addresses and ports of the packets which carried those SIP/SDP messages. The SIP/SDP fields contain the private domain IP address of the user equipment when packets pass through the address translator device, and the sender appears to be the public IP address allocated by the address translator node.

Consequently, the ALG functionality in conjunction with the AF/P-CSCF can request public addresses from the NAT-GW and modify the SIP/SDP accordingly before forwarding the message. Moreover, the ALG together with the AF/P-CSCF can initiate proper security measures (e.g. an Internet Protocol security tunnel; IPsec tunnel) for the session ignition protocol (SIP) signaling to be able to traverse the NAT device.

In order to overcome limitations related to the ALG and NAT-GW, the 3GPP has agreed to enhance the NAT traversal methodology in Release 7 specifications with Internet engineering task force (IETF) originated simple traversal of user datagram protocol (UDP) through NAT (STUN), STUN relay and ICE (Interactive Connectivity Establishment) based mechanisms.

With these methods the UE gets an external/public IP address by an enquiry to a STUN server and inserts the external/public address in the SIP/SDP level, thus making the ALG & NAT-GW functionality redundant. In addition, e.g. NAT type related and incoming session invitation related limitations of the ALG & NAT-GW method may be removed.

However, a number of problems with such methods remain to be addressed. For example, when a user equipment (UE) uses a STUN based mechanism to get an external/public IF address for the traversal of a NAT device in the access network, the AF/P-CSCF does not know that there is a NAT device between the UE and the IMS core network. Consequently, the AF/P-CSCF may not be capable of initiating proper measures, for example security measures, and session establishments for the UE will fail.

Another problem for the user equipment (UE) is to know about the NAT traversal methods supported by the (visited) network, e.g. whether the network supports ALG & NAT-GW or STUN.

A further problem for the user equipment (UE) is to find a STUN and/or a STUN relay or a related element/functionality in the network. A default element/functionality known by the user equipment (UE) may be in another network and cause e.g. looping of media path when a media relay is used.

It is the aim of the herein described embodiments to address or at least mitigate one or more of the above problems or other problems caused by the presence of an address translator.

### SUMMARY

In accordance with an embodiment, there is provided a method comprising receiving at a controller a first message from a node, the first message indicating that an address translator entity is present between the controller and the node, and sending a second message from the controller to the node, the second message indicating a procedure which can be used for communicating through the address translator entity.

In accordance with another embodiment, there is provided an apparatus comprising a controller configured to receive a first message from a node, to determine from the first message whether an address translator entity is present between the controller and the node, and to send a second message from the controller to the node, the second message indicating a procedure which can be used for communicating through the address translator entity.

In some embodiments, the node comprises a user device such as a mobile station. The controller may comprise a proxy server or call session control function, for instance a proxy call session control function (P-CSCF). The address translator entity may be a network address translator (NAT) device.

The first and second messages may be sent in the form of packet data. The first message may be for example a resource request, session initiation or registration message. In some embodiments the first message is an IP multimedia subsystem (IMS) registration message or a session initiation protocol (SIP) message.

In some embodiments, the second message may indicate a type of IP security method to be used for traversal of the NAT device. The controller may alternatively indicate to the node (via the second message) the type or types of NAT traversal methods which it supports. For instance, the second message may indicate that the controller supports one or more of ALG & NAT-GW, STUN and STUN relay. In further embodiments, the controller may indicate to the node (via the second message or a further message) contact addresses of one or more further nodes which support one or more of the NAT traversal methods indicated in the second message.

In some embodiments, the controller may send in the second message at least one contact address of a network node supporting the procedure which can be used for communicating through the address translator entity.

In some embodiments, the controller may comprise an input and an output for communicating with nodes connected to the communications system. The controller may be further provided with a processor for performing processing steps in the method discussed above.

In a further embodiment, there is provided a computer program comprising program code adapted to perform a method as described above when the program is run on a processor in a controller.

In a further embodiment, there is provided a communication system comprising a node, an address translator entity and a controller, wherein the node is configured to send a first message to the controller, the first message indicating that the address translator entity is present between the node and the controller, and the controller is configured to send a second message to the node, the second message indicating a procedure which can be used for communicating through the address translator entity.

The embodiments of the invention may provide a mechanism for informing a controller that an address translator entity is present between a node and the controller and for ensuring that the node (e.g. user device) is informed of the NAT traversal methods supported by the network.

These and other advantages and features of the invention, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

For a better understanding of the present invention and how the same may be carried into effect, reference will now be made by way of example only to the accompanying drawings in which:

Figure 1 shows a reference model for IMS access when both the signaling and media traverses NAT;

Figure 2 shows a reference model for ICE and Outbound Methodology;

Figure 3 shows a signaling chart for an embodiment applied to IMS registration signaling used for indicating (from the user equipment to AF/P-CSCF) the existence of NAT in the access side; and

Figure 4 is a representation of circuitry for an electronic device within which various aspects of the present invention may be implemented.

### DETAILED DESCRIPTION OF VARIOUS EMBODIMENTS

To assist in understanding the invention, an explanation of a possible underlying communication system is given first with reference to a communication system in which a backbone communication network provides user equipment with access to multimedia services via a localized network. A multimedia system typically includes various network entities for the provision of the multimedia services. The multimedia services are intended to offer, inter alia, internet protocol (IP) based packet data communication sessions for user equipments.

A wireless access system can be arranged to serve mobile user devices via a wireless interface between the user device and one or a plurality of base stations to provide access to a communication network covering a wider area. The mobile user device will be referred to below as mobile stations or user equipment, where appropriate.

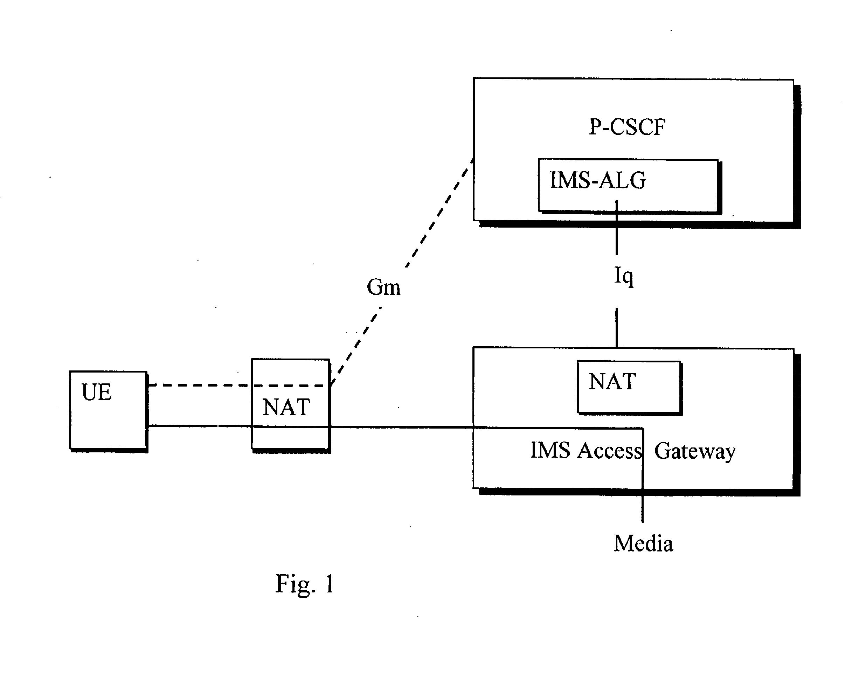

In Figure 1, a network provides packet switched data transmission in a packet switched domain for a user equipment. The network shown is connected to an external data network, for example to a packet switched data network (PSDN) such as the Internet via an appropriate gateway arrangement, such as an IP multimedia subsystem (IMS) access gateway. A base station of a local wireless access system is arranged to transmit signals to and receive signals from the user equipment via a wireless interface. Correspondingly, the user equipment is able to wirelessly transmit signals to and receive signals from the base station. It should be appreciated that a communication system may include a number of local access systems. A number of mobile devices may be in simultaneous communication via the one or more access systems.

The user equipment may access various services, including services offered by the data network via a wireless connection. The user equipment may thus be used for tasks such as making and receiving phone calls, for receiving and sending data from and to a network and for experiencing multimedia content. Any appropriate mobile station equipment adapted for communication based on an appropriate protocol, for example the internet protocol (IP), may be used to connect to the network. For example, a user may access the cellular network by user equipment such as a personal computer, personal data assistant (PDA), mobile station (MS), portable computer, combinations thereof or the like.

A mobile station is typically provided with a processor and memory for accomplishing the required tasks. A user equipment such as a mobile station may include an antenna for wirelessly receiving and transmitting signals from and to base stations of the mobile communication network. A user device may also be provided with a display for displaying images and other graphical information for the user thereof. A speaker may also be provided. The operation of the user device may be controlled by a suitable user interface such as key pad, voice commands, touch sensitive screen or pad, combinations thereof or the like.

Services can be provided for users by various functions on control and user planes. From these the control plane functions are understood as relating to support operations such as signaling whereas user plane operations relate to communication of the actual payload data. In Figure 1 control plane communications associated with the multimedia services are show by the dashed lines and user plane connections are shown by the solid lines. Principal differences in the user and control plane communications are explained below.

The network entities providing the control plane functions, such as signaling, may comprise servers. In a possible multimedia network architecture several different servers can be employed for handling different control plane functions. A control server may be provided by an IP Multimedia Session control server, such as a Session Initiation Protocol application level gateway (SIP ALG), call session control function (e.g. P-CSCF), or the like. The call session control functions can be divided into various categories such as a proxy call session control function (P-CSCF), interrogating call session control function (I-CSCF) and serving call session control function (S-CSCF). In Figure 1 the required control plane functions are understood to be provided by a P-CSCF and IMS-ALG.

In the example of Figure 1 an IMS access gateway is located on the user plane of the multimedia network and is connected to the IMS-ALG via an Iq interface. Figure 1 shows further an address translator node connected between the user equipment and the IMS access gateway.

A function of the control server, i.e. the P-CSCF and IMS-ALG, is to manage the IM service, and therefore only packets containing some control protocol (e.g. SIP) signaling go through the control servers. Any media traffic that is communicated on the user plane does not need to traverse the control servers, but only traverses servers such as the IMS access gateway, as well any address translators, media proxies and intermediate routers there might be.

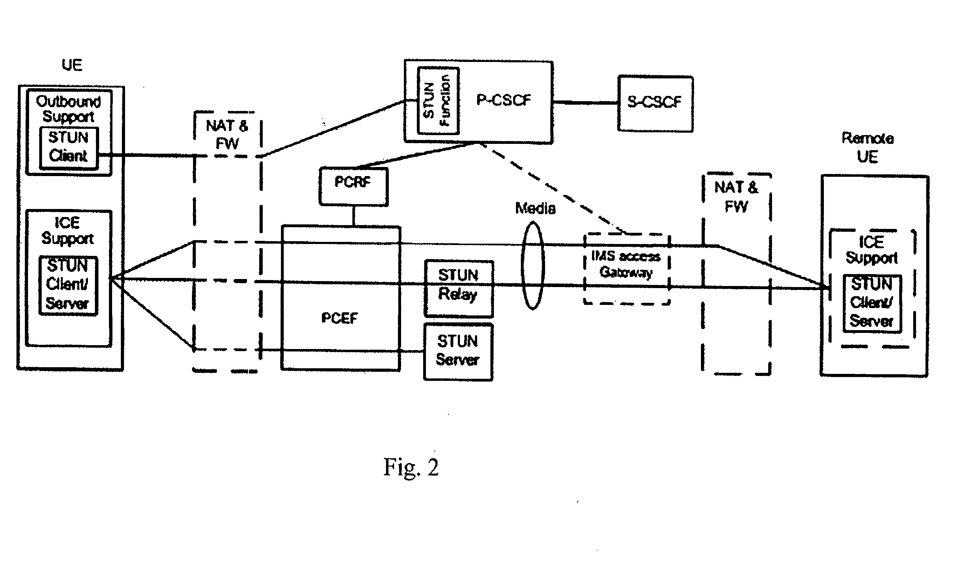

In contrast Figure 2 shows a reference model for interactive connectivity establishment (ICE) and outbound methodology using a STUN-based NAT traversal method.

In an embodiment, when the user equipment uses a facility in the network, possibly affecting the communication between the user equipment and a communication partner (e.g. a network element such as the P-CSCF or another terminal), the user equipment indicates the usage of the facility to the communication partner (e.g. P-CSCF) to enable adaptation to the usage of the facility in a communication session.

In its response to the user equipment, the network may indicate which functionalities, related to the indication by the user equipment, it supports. The network may also send contact addresses of the supported functionalities to the user equipment.

An embodiment involves a STUN-based NAT traversal method in LMS access. In this embodiment, the user equipment becomes aware of the existence of a NAT device (or NAT devices) between itself and the core network by the public/external IP address sent by the STUN server. This happens typically before there are any trials to establish a communication session.

In this embodiment the user equipment indicates the existence of the NAT device(s), and possibly the type or other parameters of the device(s), to the AF/P-CSCF before trying to establish any sessions. The indication and the related information can be transported from the user equipment to the AF/P-CSCF e.g. in an IMS registration message. For example the following mechanisms could be used for carrying the information in a SIP message.

The indication of the existence of the NAT device (i.e. the NAT indication) may be sent in a via-header. In addition to its own IP address, the user equipment may add an indication about the existence of a NAT device e.g. in a via-extension parameter.

Alternatively, the indication may be carried in a contact-header. In addition to its own IP address, the user equipment may add a feature tag or tags indicating the existence of a NAT device (e.g. according to the Network Working Group Request for Comments (RFC) 3840).

In further embodiments, the user equipment may add an option tag or tags indicating existence of a NAT device to a proxy-require header or any other existing header.

A further option is to use a new header for carrying the indication of the presence of the NAT device. For example a new header e.g. a P-header is reserved for transmitting the information about the existence of a NAT device, type and other related parameters.

In any of the above cases the user equipment may include also indication of the type of the NAT and other parameters. These cases may also be combined.

The AF/F-CSCF may extract the information from the SIP message and use it for deciding on which measures are required for the communication with the user equipment, e.g. which mode of IP security method is required for the communication to be able to traverse the detected NAT device(s).

In its response to the user equipment the AF/P-CSCF may indicate that it supports e.g. ALG & NAT-GW, STUN, STUN relay or possibly other NAT traversal methods. The P-CSCF may also send contact addresses of the servers supporting the indicated functionalities to the user equipment.

The user equipment may also use the detection of the NAT device(s) for deciding on which measures are required for the communication with the network, e.g. which mode of IP security method is required for the communication to be able to traverse the detected NAT device(s), or which NAT traversal method to use.

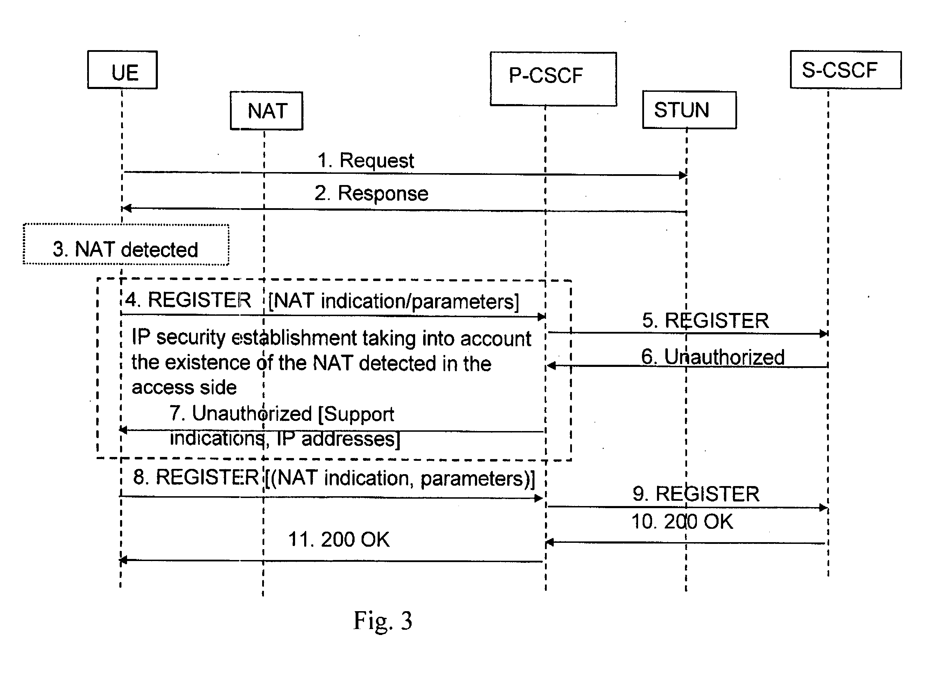

A signaling method according to one embodiment is now discussed with reference to the signaling flowchart of Figure 3.

In step 1 of Figure 3 the user equipment sends a request to the STUN server. The STUN server responds to the user equipment in step 2 and delivers a public/external IP address. In step 3 the user equipment detects the NAT at the access side by the IP address sent by the STUN server.

The user equipment then sends a REGISTER request, with parameters indicating the possible existence of a NAT device, to the P-CSCF, as shown in step 4. In step 5 the P-CSCF sends the REGISTER request to the S-CSCF and in step 6 the S-CSCF responds with an "Unauthorized' message.

In step 7 the P-CSCF sends the "Unauthorized" message to the user equipment. The user equipment and the P-CSCF exchange IP security parameters with messages 4 and 7 establishing a proper mode of operation for the signaling to be able to traverse the NAT device in the access side. The P-CSCF may also indicate that it supports e.g. ALG & NAT-GW, STUN, STUN relay or possibly other NAT traversal methods, and may also send contact addresses of the servers supporting the indicated functionalities.

In steps 8-11 the user equipment, P-CSCF and S-CSCF complete the IMS registration using secured messages.

In the case of a general SIP, IP or other communication network, the indication may be carried in the initial request. For example in the IETF type of SIP networks registration is not mandatory, and the indication of NAT and/or type of the NAT and /or other parameter(s) need to be send in the initial request (e.g. INVITE, MESSAGE, PUBLISH, etc).

Embodiments of the present invention may be applicable to further situations where an UAC (User Agent Client) wants to communicate with an UAS (User Agent Server), or more generally to any method where a client communicates with a proxy/server.

In further embodiments the roles of the controller and user equipment may be reversed, e.g. a proxy/server starts communication with a client.

Thus in embodiments of the present invention, a terminal or user equipment may detect the existence of a NAT device by a public/external IP address. The terminal/user equipment then sends an indication (and possibly further information) in a SIP (e.g. IMS registration) message to the IMS core network (AF/P-CSCF). The AF/P-CSCF uses the information to take measures for successful NAT traversal, e.g. by choosing a proper mode of IP security measures.

The required data processing functions may be provided by one or more data processor entities. Appropriately adapted computer program code product may be used for implementing the embodiments, when loaded to a computer. The program code product for providing the operation may be stored on and provided by a carrier medium such as a carrier disc, card or tape. A possibility is to download the program code product via a data network. Implementation may be provided with appropriate software in a server.

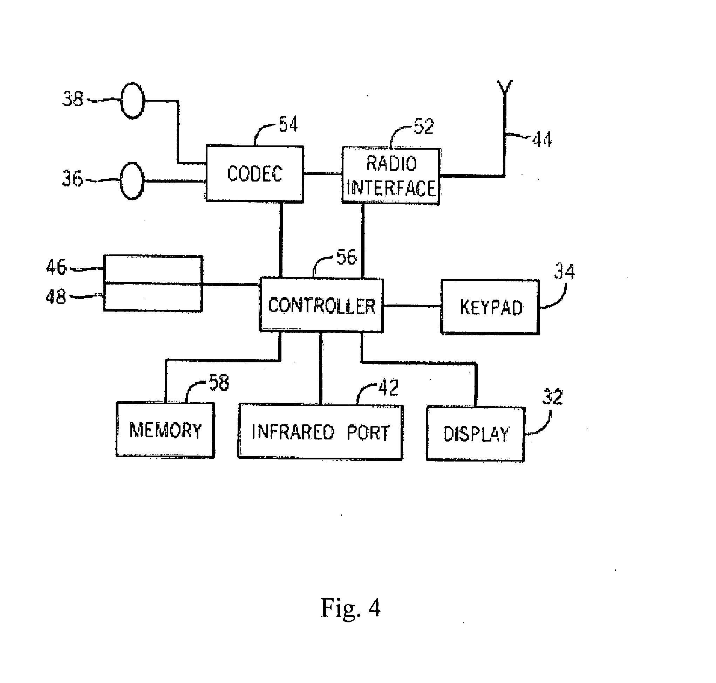

Figure 4 shows an example of the circuitry of a representative electronic device within which the present invention may be implemented. It should be understood, however, that the present invention is not intended to be limited to one particular type of electronic device. The electronic device of Figure 4 includes a display 32 in the form of a liquid crystal display, a keypad 34, a microphone 36, an ear-piece 38, an infrared port 42, an antenna 44, a smart card 46 in the form of a UICC according to one embodiment of the invention, a card reader 48, radio interface circuitry 52, codec circuitry 54, a controller 56, and a memory 58. Individual circuits and elements are all of a type well known in the art.

It is understood that although the certain embodiments have been described above with reference to the exemplifying architecture of a third generation (3G) mobile communication system, the embodiments may be applied to any other suitable forms of communication systems than the one illustrated and described herein.

The present invention is described in the general context of method steps, which may be implemented in one embodiment by a program product including computer-executable instructions, such as program code, executed by computers in networked environments. Generally, program modules include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps.

Software and web implementations of the present invention could be accomplished with standard programming techniques with rule based logic and other logic to accomplish the various database searching steps, correlation steps, comparison steps and decision steps. It should also be noted that the words "component" and "module," as used herein are intended to encompass implementations using one or more lines of software code, and/or hardware implementations, and/or equipment for receiving manual inputs.

The foregoing description of embodiments of the present invention have been presented for purposes of illustration and description. It is not intended to be exhaustive or to limit the present invention to the precise form disclosed, and modifications and variations are possible in light of the above teachings or may be acquired from practice of the present invention. The embodiments were chosen and described in order to explain the principles of the present invention and its practical application to enable one skilled in the art to utilize the present invention in various embodiments and with various modifications as are suited to the particular use contemplated.

## Claims

1. A method comprising: detecting at a node presence of an address translator entity, sending to a controller a first message from the node, the first message indicating that an address translator entity is present between the controller and the node, and receiving a second message from the controller in the node, the second message indicating a procedure which can be used for communicating through the address translator entity.

2. A method as claimed in claim 1, wherein the node comprises a user device.

3. A method as claimed in claim 1, comprising receiving the first message at a proxy server or a call session control function entity.

4. A method as claimed in claim 1, wherein the first message comprises one of a resource request message, a session initiation message and a registration message.

5. A method as claimed in claim 4, wherein the first message comprises one of an internet protocol multimedia subsystem registration message or a session initiation protocol message.

6. A method as claimed in claim 1, wherein the second message indicates a type of internet protocol security method to be used for traversal of the address translator entity, or alternatively the second message indicates at least one of an application level gateway, network address translation gateway simple traversal, STUN or STUN-relay procedure which can be used for communicating through the address translator entity.

7. A method as claimed in any preceding claim, comprising sending an indication from the controller to the node of contact addresses of one or more further nodes which support one or more address translator entity traversal methods indicated in the second message.

8. An apparatus comprising a controller configured to receive a first message from a node, the first message indicating presence of an address translation entity, to determine from the first message whether an address translator entity is present between the controller and the node, and to send a second message to the node, the second message indicating a procedure which can be used for communicating through the address translator entity.

9. An apparatus as claimed in claim 9, wherein the controller is configured to send in the second message at least one contact address of a network node supporting the procedure which can be used for communicating through the address translator entity.

10. A proxy server comprising an apparatus as claimed in claim 9.

11. A call session control function entity comprising an apparatus as claimed in claim 9.

12. A computer program comprising program code adapted to perform a method as claimed in any of claims 1 to 7 when the program is run on a processor.

13. A communication system comprising a node, an address translator entity and a controller, wherein the node is configured to detect presence of an address translation entity, the node is configured to send a first message to the controller, the first message indicating that the address translator entity is present between the node and the controller, and the controller is configured to send a second message to the node, the second message indicating a procedure which can be used for communicating through the address translator entity.

14. A node comprising at least one data processor entity configured to:
detect presence of an address translator entity;
send to a controller a first message, the first message indicating that an address translator entity is present between the controller and the node, and
receive a second message from the controller, the second message indicating a procedure which can be used for communicating through the address translator entity.

15. A node according to claim 14, wherein the second message indicates a type of internet protocol security method to be used for traversal of the address translator entity, or alternatively at least one of an application level gateway, network address translation gateway simple traversal, STUN or STUN-relay procedure which can be used for communicating through the address translator entity.

## Patentansprüche

1. Verfahren, das Folgendes umfasst: Ermitteln des Vorhandenseins einer Adressenumsetzereinheit an einem Knoten, Senden einer ersten Nachricht von dem Knoten an eine Steuereinrichtung, wobei die erste Nachricht angibt, dass eine Adressenumsetzereinheit zwischen der Steuereinrichtung und dem Knoten vorhanden ist, und Empfangen einer zweiten Nachricht von der Steuereinrichtung im Knoten, wobei die zweite Nachricht eine Prozedur angibt, die zum Kommunizieren über die Adressenumsetzereinheit verwendet werden kann.

2. Verfahren nach Anspruch 1, wobei der Knoten eine Benutzervorrichtung umfasst.

3. Verfahren nach Anspruch 1, das das Empfangen der ersten Nachricht an einem Proxy-Server oder einer Call-Session-Control-Function-Einheit umfasst.

4. Verfahren nach Anspruch 1, wobei die erste Nachricht eine Ressourcenanforderungsnachricht, eine Session-Initiation-Nachricht oder eine Registrierungsnachricht umfasst.

5. Verfahren nach Anspruch 4, wobei die erste Nachricht eine Internet-Protokoll-Multimedia-Subsystem-Registrierungsnachricht oder eine Session-Initiation-Protokoll-Nachricht umfasst.

6. Verfahren nach Anspruch 1, wobei die zweite Nachricht einen Typ des für das Traversal der Adressenumsetzereinheit zu verwendenden Internet-Protokoll-Sicherheitsverfahrens angibt oder die zweite Nachricht alternativ mindestens eines von einer Application Level Gateway, Network Address Translation Gateway Simple Traversal, STUN- oder STUN-Relay-Prozedur angibt, die zum Kommunizieren durch die Adressenumsetzereinheit verwendet werden kann.

7. Verfahren nach einem der vorhergehenden Ansprüche, das das Senden einer Angabe von der Steuereinrichtung an den Knoten von Kontaktadressen von einem oder mehreren weiteren Knoten umfasst, die ein oder mehrere in der zweiten Nachricht angegebene Adressenumsetzereinheits-Traversal-Verfahren unterstützen.

8. Vorrichtung, die eine Steuereinrichtung umfasst, die konfiguriert ist, um eine erste Nachricht von einem Knoten zu empfangen, wobei die erste Nachricht das Vorhandensein einer Adressenumsetzereinheit angibt, um von der ersten Nachricht zu bestimmen, ob eine Adressenumsetzereinheit zwischen der Steuereinrichtung und dem Knoten vorhanden ist, und um eine zweite Nachricht an den Knoten zu senden, wobei die zweite Nachricht eine Prozedur angibt, die zum Kommunizieren durch die Adressenumsetzereinheit verwendet werden kann.

9. Vorrichtung nach Anspruch 9, wobei die Steuereinrichtung konfiguriert ist, um in der zweiten Nachricht mindestens eine Kontaktadresse eines Netzknotens zu senden, der die Prozedur unterstützt, die zum Kommunizieren durch die Adressenumsetzereinheit verwendet werden kann.

10. Proxy-Server, der eine Vorrichtung nach Anspruch 9 umfasst.

11. Call-Session-Control-Function-Einheit, die eine Vorrichtung nach Anspruch 9 umfasst.

12. Computerprogramm, das Programmcode umfasst, der angepasst ist, um ein Verfahren nach einem der Ansprüche 1 bis 7 durchzuführen, wenn das Programm auf einem Prozessor ausgeführt wird.

13. Kommunikationssystem, das einen Knoten, eine Adressenumsetzereinheit und eine Steuereinrichtung umfasst, wobei der Knoten konfiguriert ist, um das Vorhandensein einer Adressenumsetzereinheit zu ermitteln, wobei der Knoten konfiguriert ist, um eine erste Nachricht an die Steuereinrichtung zu senden, wobei die erste Nachricht angibt, dass die Adressenumsetzereinheit zwischen dem Knoten und der Steuereinrichtung vorhanden ist, und die Steuereinrichtung konfiguriert ist, um eine zweite Nachricht an den Knoten zu schicken, wobei die zweite Nachricht eine Prozedur angibt, die zum Kommunizieren durch die Adressenumsetzereinheit verwendet werden kann.

14. Knoten, der mindestens eine Datenprozessoreinheit umfasst, die für Folgendes konfiguriert ist:
Ermitteln des Vorhandenseins einer Adressenumsetzereinheit;
Senden einer ersten Nachricht an eine Steuereinrichtung, wobei die erste Nachricht angibt,
dass eine Adressenumsetzereinheit zwischen der Steuereinrichtung und dem Knoten vorhanden ist, und
Empfangen einer zweiten Nachricht von der Steuereinrichtung, wobei die zweite Nachricht eine Prozedur angibt, die zum Kommunizieren durch die Adressenumsetzereinheit verwendet werden kann.

15. Knoten nach Anspruch 14, wobei die zweite Nachricht einen Typ von Internet-Protokoll-Sicherheitsverfahren, der zum Traversal der Adressenumsetzereinheit zu verwenden ist, oder alternativ mindestens eines von einer Application Level Gateway, Network Address Translation Gateway Simple Traversal, STUN oder STUN-Relay-Prozedur angibt, die zum Kommunizieren durch die Adressenumsetzereinheit verwendet werden kann.

## Revendications

1. Procédé comprenant les étapes suivantes consistant à : détecter au niveau d'un noeud la présence d'une entité de traduction d'adresse, envoyer à un contrôleur un premier message à partir du noeud, le premier message indiquant que l'entité de traduction d'adresse est présente entre le contrôleur et le noeud, et recevoir un second message en provenance du contrôleur dans le noeud, le second message indiquant une procédure qui peut être utilisée pour communiquer au travers de l'entité de traduction d'adresse.

2. Procédé selon la revendication 1, dans lequel le noeud comprend un dispositif d'utilisateur.

3. Procédé selon la revendication 1, comprenant l'étape consistant à recevoir le premier message au niveau d'un serveur proxy ou d'une entité à fonction de commande de session d'appel.

4. Procédé selon la revendication 1, dans lequel le premier message comprend l'un des messages suivants : un message de demande de ressources, un message d'ouverture de session ou un message d'enregistrement.

5. Procédé selon la revendication 4, dans lequel le premier message comprend l'un des messages suivants : un message d'enregistrement de sous-système multimédia sous protocole Internet ou un message de protocole d'ouverture de session.

6. Procédé selon la revendication 1. dans lequel le second message indique un type de procédé de sécurisation sous protocole Internet qui doit être utilisé pour passer au travers de l'entité de traduction d'adresse, ou bien le second message indique au moins l'un des éléments suivants : une passerelle de niveau d'application, une traversée simple de passerelle de traduction d'adresse réseau, STUN ou une procédure de relais-ST qui peut être utilisée pour communiquer au travers de l'entité de traduction d'adresse.

7. Procédé selon l'une quelconque des revendications précédentes, comprenant l'étape consistant à envoyer une indication depuis le contrôleur au noeud portant sur des adresse de contact d'un ou de plusieurs noeuds supplémentaires qui supportent un ou plusieurs procédés de traversée d'entité de traduction d'adresse indiqués dans le second message.

8. Appareil comprenant un dispositif de commande configuré pour recevoir un premier message en provenance d'un noeud, le premier message indiquant la présence d'une entité de traduction d'adresse, pour déterminer à partir du premier message si une entité de traduction d'adresse est présente entre le contrôleur et le noeud, et pour envoyer un seconde message au noeud, le second message indiquant une procédure qui peut être utilisée pour communiquer au travers de l'entité de traduction d'adresse.

9. Appareil selon la revendication 9, dans lequel le contrôleur est configuré pour envoyer dans le second message au moins une adresse de contact d'un noeud de réseau supportant la procédure qui peut être utilisée pour communiquer au travers de l'entité de traduction d'adresse.

10. Serveur proxy comprenant un appareil selon la revendication 9.

11. Entité à fonction de commande de session d'appel, comprenant un appareil selon la revendication 9.

12. Programme informatique comprenant un code de programme adapté pour réaliser un procédé selon l'une quelconque des revendications 1 à 7 lorsque le programme est exécuté sur un processeur.

13. Système de communication comprenant un noeud, une entité de traduction d'adresse et un contrôleur, dans lequel le noeud est configuré pour détecter la présence d'une entité de traduction d'adresse, le noeud est configuré pour envoyer un premier message au contrôleur, le premier message indiquant que l'entité de traduction d'adresse est présente entre le noeud et le contrôleur, et le contrôleur est configuré pour envoyer un deuxième message au noeud, le second message indiquant une procédure qui peut être utilisée pour communiquer au travers de l'entité de traduction d'adresse.

14. Noeud comprenant au moins une entité de traitement de données configurée pour :
détecter la présence d'une entité de traduction d'adresse;
envoyer à un contrôleur un premier message, le premier message indiquant qu'une entité de traduction d'adresse est présente entre le contrôleur et le noeud, et
recevoir un second message en provenance du contrôleur, le second message indiquant une procédure qui peut être utilisée pour communiquer au travers de l'entité de traduction d'adresse.

15. Noeud selon la revendication 14, dans lequel le second message indique un type de procédé de sécurisation sous protocole Internet qui doit être utilisé pour passer au travers de l'entité de traduction d'adresse, ou bien au moins un des éléments suivants : une passerelle de niveau d'application, une traversée simple de passerelle de traduction d'adresse réseau, STUN ou une procédure de relais-STUN qui peut être utilisée pour communiquer au travers de l'entité de traduction d'adresse.
